# EUROPÄISCHE PATENTANMELDUNG

(11) **EP 1 013 980 A2**
(43) Veröffentlichungstag der Anmeldung: **28.06.2000**
(21) Anmeldenummer: 99124693.5
(22) Anmeldetag: 11.12.1999
(51) Int. Cl.: F16L 37/092

(54) **Schubgesicherte Steckverbindung für Muffenrohre**

(30) Priorität: 18.12.1998 DE 19858514
(71) Anmelder: Uponor Innovation AB, 513 81 Fristad (SE)
(72) Erfinder: Eiglsberger, Johann, 84347 Pfarrkirchen (DE); Inkoferer, Rainer, 84389 Postmünster (DE); Thoma, Alexander, 94036 Passau (DE)
(74) Vertreter: Ksoll, Peter, Dr.-Ing.

(57) **Zusammenfassung**

Die Erfindung betrifft eine Muffenverbindung mit einer Schubsicherung, bei der ein Ende (2) eines Rohrs (1) in eine Muffe (3) einschiebbar ist, wobei innerhalb der Muffe (3) in einer Dichtkammer (6) ein Dichtelement (8) vorgesehen und in einer sich zum Muffenende (4) hin im Durchmesser verjüngenden Verriegelungskammer (5) ein Klemmring (19) angeordnet ist. Der Klemmring (19) umfasst einen ringförmigen Tragkörper (20) aus einem zumindest begrenzt nachgiebigen Material und mehrere in Umfangsrichtung im Abstand zueinander vom Tragkörper (20) verteilt gehaltene Klemmsegmente (21) mit innenseitiger Verzahnung. Diese bestehen aus einem gegenüber dem Tragkörper (20) härteren Material und sind über mindestens eine sich radial über den Außenumfang (24) des Klemmsegments (21) erstreckende Widerlagerschulter (25) mit dem Tragkörper (20) gekoppelt.

## Beschreibung

Die Erfindung betrifft eine Muffenverbindung mit einer Schubsicherung gemäß den Merkmalen im Oberbegriff des Anspruchs 1.

In der DE 41 34 089 A1 wird eine schubgesicherte Steckmuffenverbindung für Formstücke sowie Muffenrohre offenbart, bei der ein Dichtring und ein von diesem getrennt ausgebildeter Klemmring im Muffenende angeordnet sind. Der Klemmring weist eine Vielzahl von in Umfangsrichtung mit gegenseitigem Abstand angeordneten Klemmsegmenten mit einer ballig ausgebildeten äußeren Mantelfläche und einer gezahnten Innenfläche auf. Durch Zusammenwirken der balligen Mantelfläche mit einer sich zum Muffenende hin im Durchmesser verjüngenden Verriegelungskammer werden die Klemmsegmente bei axial wirkenden Kräften radial gegen das in der Muffe liegende Rohrende gedrückt. Dadurch wird verhindert, dass das Rohr aus der Muffe heraus rutscht.

Die Klemmsegmente sind über einen elastomeren ringförmigen Tragkörper miteinander verbunden. Dieser Tragkörper erstreckt sich sowohl zwischen den einzelnen Klemmsegmenten als auch zwischen der balligen Manteltläche und der Innenfläche der Verriegelungskammer.

Der Klemmring ist erheblichen Belastungen unterworfen, wobei der elastomere Tragkörper ausgleichend zwischen den einzelnen Klemmsegmenten wirkt. Kritisch ist insbesondere der Kontaktbereich der Metall/Elastomer-Verbindung, wodurch es in Extremsituationen sogar zum Lösen einzelner Klemmsegmente aus dem Tragkörper kommen kann. Dadurch kann die Schubsicherung der Muffenverbindung aufgehoben werden, was die Betriebssicherheit beeinträchtigt und zu Undichtigkeiten an der Verbindungsstelle führt.

Aus der europäischen Patentschrift 0 541 472 A1 ist es bekannt, die Klemmsegmente mit Ausnahme ihrer verzahnten Innenflächen vollständig in einen elastomeren Tragkörper einzubetten. Hierbei wird der Tragkörper bis auf die Oberfläche des in der Muffe liegenden Rohrendes geführt, wodurch die Klemmsegmente vor korrosiven Einflüssen geschützt werden sollen. Die Klemmsegmente sind bei diesem Vorschlag zwar lageorientiert, jedoch ist der Tragkörper sehr aufwendig zu fertigen, was in wirtschaftlicher Hinsicht von Nachteil ist.

Der Erfindung liegt ausgehend vom Stand der Technik die Aufgabe zugrunde, eine Muffenverbindung mit einer Schubsicherung bereit zu stellen, bei der die Verbindung zwischen dem Tragkörper und den Klemmsegmenten sicherer und einfacher gestaltet ist.

Die Erfindung löst die Aufgabe durch die im kennzeichnenden Teil des Anspruchs 1 angegebenen Merkmale.

Der Grundgedanke der Erfindung ist, die Klemmsegmente mit mindestens einer sich radial erstreckenden Widerlagerschulter zu versehen und so mit dem Tragkörper zu koppeln. Derartige Widerlagerschultern bieten zusätzliche Angriffsflächen gegenüber zwischen dem Tragkörper und den Klemmsegmenten wirkenden Axialkräften. Dadurch werden die an der Grenzfläche zwischen dem härteren Material der Klemmsegmente und einem begrenzt nachgiebigen Material des Tragkörpers wirkenden Schubkräfte vermindert und in besser beherrschbare Zug- und Druckkräfte überführt. Lokale Schubspannungsüberhöhungen, die unter Umständen flächige Ablösungen des Tragkörpers von den Klemmsegmenten hervorrufen, können wirkungsvoll verhindert werden. Durch die Seitenflächen der Widerlagerschultern wird die Summe der radial ausgerichteten Flächen, die axial wirkende Kräfte aufnehmen können, vergrößert. Besonders vorteilhaft ist hierbei die flächenbündige Anordnung der Widerlagerschultern an den axialen Stirnseiten der Klemmsegmente, wodurch die Stirnflächen insgesamt vergrößert werden.

Vorteilhaft erstreckt sich jede Widerlagerschulter über die gesamte Umfangslänge eines Klemmsegments (Anspruch 2). Die so geschaffenen radialen Angriffsflächen sind dann maximal.

Nach Anspruch 3 haben die Klemmsegmente in Längsrichtung der Muffe gesehen einen im wesentlichen L-, T- oder U-förmigen Querschnitt. Der Grundkörper der Klemmsegmente ist hierbei im wesentlichen rechteckig konfiguriert mit einem mit dem Ende des Rohrs zusammenwirkenden verzahnten Innenumfang und einem im wesentlichen parallel zur äußeren Oberfläche des Rohrs verlaufenden Außenumfang. Auf diesem Außenumfang erstreckt sich die radiale Widerlagerschulter vorteilhaft bündig mit der axialen Stirnfläche des Klemmsegments (L-Form) oder in ihrem mittleren Bereich (T-Form). Es ist im Rahmen der Erfindung auch denkbar, mehrere Widerlagerschultern vorzusehen, wobei vor allem ihre stirnseitige Anordnung (U-Form) von Vorteil ist. Selbstverständlich können im Rahmen der Erfindung auch noch weitere Widerlagerschultern vorgesehen werden.

Eine vorteilhafte Ausführungsform der Erfindung ist im Anspruch 4 gegeben, wobei der Tragkörper aus einem gummielastischen Material besteht, das sich zwischen beabstandeten Widerlagerschultern eines U-förmigen Klemmsegments erstreckt. Eine so gebildete Aufnahmenut gewährleistet die sichere Eingliederung des Tragkörpers zwischen den Widerlagerschultern. Die Widerlagerschultern umgreifen quasi den Tragkörper, wodurch eine sehr sichere Verbindung geschaffen wird. Die Klemmsegmente können nicht aus dem Tragring herausrutschen.

Es ist weiterhin von Vorteil, wenn die Aufnahmenut einen trapezförmigen Querschnitt aufweist (Anspruch 5). Diese Kontur bietet dem Klemmsegment zusätzlichen Halt. Gegebenenfalls kann der Querschnitt der Aufnahmenut aber auch schwalbenschwanzförmig sein.

Nach Anspruch 6 ist der Querschnitt des U-förmigen Klemmsegments dem Querschnitt der Verriegelungskammer angepasst. Die Widerlagerschultern besitzen eine unterschiedliche radiale Ausdehnung entsprechend dem Durchmesser der Verriegelungskammer in der jeweiligen Radialebene. Ihre Enden sind abgeschrägt, um eine flächige Berührung mit der Muffe zu gewährleisten und radial angreifende Kräfte mit geringer Flächenpressung zu übertragen.

Bei Klemmsegmenten U-förmigen Querschnitts besteht der Tragkörper bevorzugt aus einem Elastomer oder auch aus Gummi, das durch Vulkanisierung mit den Klemmsegmenten gekoppelt ist.

Eine vorteilhafte Ausführungsform wird in den Merkmalen des Anspruchs 7 gesehen. Zur axialen Vorspannung des Klemmrings sind an der dem Muffenende abgewandten Stirnseite des Tragkörpers auf dem Umfang verteilt noppenartige Puffer ausgebildet. Die Puffer haben die Funktion, den Klemmring bei einer axialen Verlagerung wieder federnd in den verjüngten Abschnitt der Verriegelungskammer zu drücken, so dass der Klemmring bei Druckstößen und der damit einhergehenden Axialbewegung das Rohr möglichst schnell gegen Herausziehen sichert.

Im Rahmen der Ausführungsform des Anspruchs 8 greift eine Widerlagerschulter des Klemmsegments in eine radial innenliegende Fixiernut des Tragkörpers ein. Vor allem bei einem weniger nachgiebigen Tragkörper, z.B. aus Kunststoff, kann es ausreichend sein, die Klemmsegmente lediglich in den separat gefertigten Tragkörper einzulegen, wobei der gegenseitige axiale Halt durch Umschließen der Stirnseiten und des radialen Augenumfangs des Klemmsegments einschließlich der in der Fixiernut liegenden Widerlagerschulter bewirkt wird. Das Klemmsegment ist mit Ausnahme seiner Klemmverzahnung vollständig in den Tragkörper eingebettet. An den axialen Stirnseiten des Klemmsegnents erstreckt sich der Tragkörper dabei nicht bis auf die äußere Oberfläche des Rohrs, um die Klemmwirkung der Verzahnung nicht zu beeinträchtigen. Ein derartiger Tragkörper wirkt bei Druckstößen und den damit an der Muffenverbindung wirkenden Kräfte auch als Dämpf er zwischen der Muffe und dem Rohr, wodurch Spannungsspitzen in den Bauteilen vermindert werden.

Dass die Klemmsegmente sicher in dem Tragkörper fixiert sind, wird mit dem Merkmal des Anspruchs 9 möglich. Danach ist vorgesehen, an der Widerlagerschulter eine seitliche Haltenase anzuordnen, die bevorzugt spitz zuläuft und durch leichten Druck in das Material des Tragrings eindringen kann, um das Klemmsegment in der ihm zugedachten Position zu fixieren.

Eine für die Praxis besonders vorteilhafte Weiterbildung der Erfindung ist in Anspruch 10 gegeben. Die Montage von Klemmringen, deren Tragkörper aus einem wenig nachgiebigen Material besteht, wird erheblich vereinfacht, wenn der Klemmring nicht kreisförmig geschlossen ist, sondern in einem Bereich seines Umfangs mit einem Schlitz versehen wird. Das ist vorteilhaft zwischen zwei Klemmsegmenten möglich.

Ein solcher Schlitz ermöglicht es, dass der Klemmring auf einen kleineren Augendurchmesser zusammengedrückt und so problemlos durch das Muffenende in die im Durchmesser größere Verriegelungskammer eingeführt werden kann, in der sich der Klemmring selbständig ausdehnt. Ferner werden durch den Schlitz die im Klemmring bei Durchmesserverjüngungen in Umfangsrichtung auftretenden Kräfte aufgehoben. Der Klemmring ist dadurch in Umfangsrichtung im wesentlichen kräftefrei verspannt. Der Schlitz kann parallel zur Längsachse des Klemmrings ausgerichtet sein, aber auch schräg verlaufen, wodurch die Schnittflächen aneinander vorbei gleiten können.

Im Falle der Ausführungsform gemäß Anspruch 11 erstrecken sich die Klemmsegmente in axialer Richtung durch das Muffenende und ragen aus der Muffe heraus. An diesem freien Ende ist eine sich radial erstreckende Spannschulter vorgesehen. Diese Anordnung ermöglicht eine mechanische Verriegelung der Muffenverbindung, indem die Klemmsegmente über die Spannschultern in Richtung zum Muffenende hin verlagert werden. Die Klemmsegmente bewirken dann in der sich konisch verjüngenden Verriegelungskammer die Verklemmung zwischen dem Rohr und der Muffe.

Vorteilhaft können nach Anspruch 12 zur Verriegelung der Klemmsegmente an der Spannschulter angreifende Spannvorrichtungen eingesetzt werden. Beispielsweise können zwei Keilsicheln in Form von Kreisringstücken zwischen der Stirnseite der Muffe und den Spannschultern auf die hervorstehenden Klemmsegmente aufgesetzt werden. Die sich berührenden Seitenflächen der Keilsicheln gleiten bei einer gegenläufigen Relativbewegung keilförmig aufeinander ab, so dass die Klemmsegmente in der sich verjüngenden Verriegelungskammer verkeilt werden. So wird eine sichere Fixierung auch von glatten Kunststoffrohren gewährleistet und lange Streckwege vermieden.

Neben manuellen Spannvorrichtungen sind im Rahmen der Erfindung auch automatisierte Spannvorrichtungen denkbar, die beispielsweise elektrisch, pneumatisch oder hydraulisch wirken können. Die Klemmsegmente können in einem Tragkörper aus Kunststoff verankert oder in einen Tragkörper aus Gummi einvulkanisiert werden.

Durch die aus der Muffe hervorragenden Klemmsegmente wird die Klemmwirkung zwischen der Muffe und dem Rohrende erhöht. Die vergrößerte Verzahnungsfläche bewirkt hierbei eine bessere Verkrallung der Klemmsegmente in der äußeren Oberfläche des Rohrs.

Eine vorteilhafte Variante, den Klemmring in der Verriegelungskammer vorzuspannen, ist durch die Merkmale des Anspruchs 13 gegeben. Hierbei ist der Klemmring mittels eines in der Verriegelungskammer angeordneten, mit einem Druckfluid beaufschlagbaren Schlauchs axial verlagerbar. Vorzugsweise kann der Schlauch mit Druckluft gefüllt werden. Der Schlauch dehnt sich aus und presst über die Stirnseite des Klemmrings die eingebetteten Klemmsegmente in den sich konisch verjüngenden Abschnitt der Verriegelungskammer und bewirkt somit eine zuverlässige Verriegelung der Muffenverbindung. Darüber hinaus ist ein derartiges Druckluftpolster begrenzt flexibel, wodurch eine axiale Verlagerung des Klemmrings federnd abgefangen wird.

Dass die Verriegelungselemente ihre ihnen zugedachte Position beibehalten, ist durch das Merkmal des Anspruchs 14 möglich. Hierbei werden die Verriegelungselemente beispielsweise durch eine Bandschelle, vorzugsweise aus Edelstahl, lagefixiert. Die Bandschelle wird zwischen der Stirnseite der Muffenverbindung und den Spannschultern angeordnet. Hierbei ist vorteilhaft anzuführen, dass die Bandschelle die Klemmsegmente an das Rohr presst und so die Verkrallung der Klemmsegmente in der äußeren Oberfläche des Rohrs steigert.

Die erfindungsgemäße Muffenverbindung mit Schubsicherung eignet sich insbesondere zur Verbindung von Kunststoffrohren verschiedener Materialien, z.B. von Rohren aus Polyvinylchlorid (PVC) mit Rohren aus Polyethylen (PE). Die Muffe kann auch Bestandteil eines formstabilen Formstücks sein, z.B. aus globularem Grauguss. Die Klemmsegmente können vorteilhaft aus einer Messinglegierung bestehen oder auch aus einer Mehrstoffzinnbronze (Rotguss), um einer lokalen Korrosion durch Entzinkung vorzubeugen.

Es ist darüberhinaus von Vorteil, dass das Dichtungselement jedenfalls zeitlich begrenzt unabhängig von dem Klemmring wirksam ist, wodurch die Muffenverbindung auch bei einem unvorhersehbaren Ausfall der Schubsicherung abgedichtet ist.

Die Muffenverbindung ist durch einfaches Einschieben des Rohrs bei jedem Wetter verarbeitbar sowie verlegbar und wird durch leichtes Zurückziehen des Rohrs verriegelt.

Die insbesondere bei Kunststoffrohren notwendige Reinigung und Verklebung der Rohrenden entfällt. Darüberhinaus sind keine korrosionsanfälligen Befestigungselemente wie Schrauben oder abstehende Flansche erforderlich, wodurch die Muffenverbindung raumsparend und damit kostengünstig ist.

Die Erfindung wird nachfolgend anhand von in Zeichnungen dargestellten Ausführungsbeispielen näher beschrieben. Es zeigen:
- Figur 1: im vertikalen Längsschnitt eine Muffenverbindung mit Schubsicherung;
- Figur 2: einen Tragkörper mit L-förmigen Klemmsegmenten in perspektivischer Darstellung;
- Figur 3: eine Muffenverbindung in perspektivischer Darstellung, teilweise im vertikalen Längsschnitt;
- Figur 4: einen Winkelschnitt durch einen Klemmring der Figur 3, wobei der Winkelschnitt in der oberen Hälfte durch einen Tragkörper und in der unteren Hälfte durch ein Klemmsegment geführt ist;
- Figur 5: eine Muffenverbindung mit aufgesetzter Spannvorrichtung, teilweise im vertikalen Längsschnitt;
- Figur 6: die Muffenverbindung der Figur 5 in einer Stirnansicht in Richtung der Längsachse;
- Figur 7: die Muffenverbindung gemäß Figur 5 im verriegelten Zustand;
- Figur 8: eine stirnseitige Darstellung der Muffenverbindung der Figur 7;
- Figur 9: die Muffenverbindung entsprechend Figur 7 mit aufgesetzter Bandschelle und
- Figur 10: eine weitere Ausführungsform einer Muffenverbindung, teilweise im vertikalen Längs-schnitt.

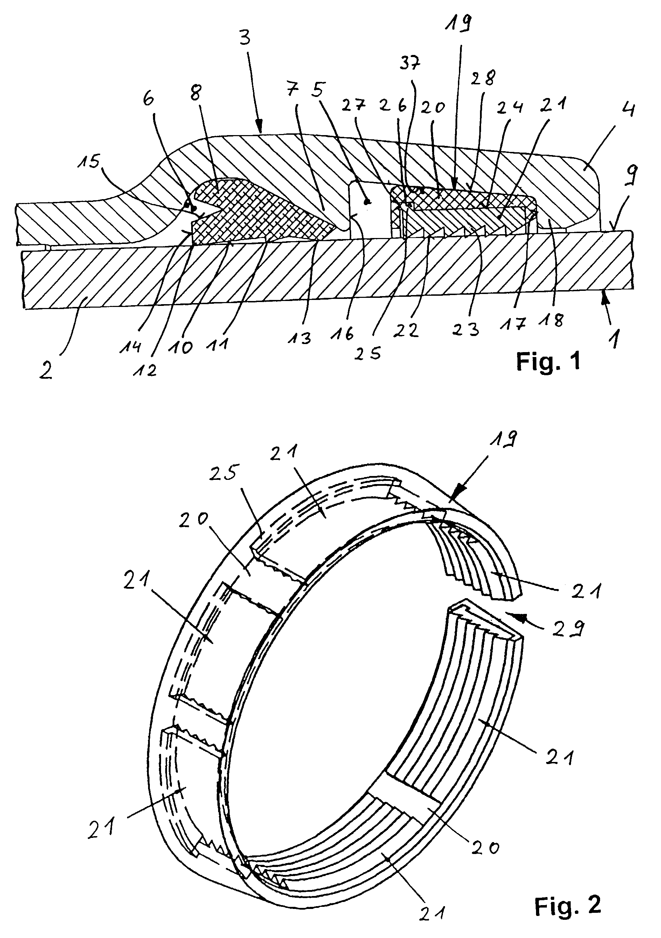

Figur 1 zeigt in einem Längsschnitt ein Rohr 1, dessen Ende 2 mit radialem Spiel außenseitig von einer Muffe 3 umgeben ist. In der Muffe 3 ist im Bereich des Muffenendes 4 eine umlaufende, nach innen offene Verriegelungskammer 5 angeordnet. Eine ebenfalls umlaufende, nach innen offene Dichtkammer 6 befindet sich benachbart zur Verriegelungskammer 5 weiter innerhalb der Muffe 4 und ist durch eine Keilwand 7 von der Verriegelungskammer 5 getrennt.

Die Dichtkammer 6 ist im Querschnitt keilförmig konfiguriert, wobei sich ihr Durchmesser zum Muffenende 4 hin verringert. In die Dichtkammer 6 ist ein Dichtelement 8 eingegliedert, das in seinem Querschnitt im wesentlichen an die Kontur der Dichtkammer 6 angepasst ist. Das Dichtelement 8 kontaktiert radial innenseitig die äußere Oberfläche 9 des Rohrs 1 und liegt radial außenseitig an der abgeschrägten Keilwand 7. Das Dichtelement 8 weist im mittleren Bereich seiner radialen Innenseite 10 eine Dichtlippe 11 auf, die zusammen mit einer umlaufenden vorderen Innenkante 12 und einer umlaufenden hinteren Innenkante 13 des Dichtelements 8 an der äußeren Oberfläche 9 des Rohrs 1 dichtend anliegt. Das Dichtelement 8 ist an seiner Stirnseite 14 mit einer axial gerichteten V-förmigen Einkerbung 15 versehen.

Die Verriegelungskammer 5 verjüngt sich ausgehend von der Keilwand 7 konisch in Richtung zum Muffenende 4. Sie wird in axialer Richtung durch eine radiale Stirnfläche 16 an der Keilwand 7 und im Bereich des Muffenendes 4 durch eine ebenfalls radial verlaufende Stirnfläche 17 eines Kragens 18 mit gegenüber der Stirnfläche 16 verringertem Innendurchmesser begrenzt.

In der Verriegelungskammer 5 ist ein Klemmring 19 angeordnet, der einen Tragkörper 20 aus nachgiebigem Kunststoff und mehrere in Umfangsrichtung im Abstand zueinander vom Tragkörper 20 verteilt gehaltene Klemmsegmente 21 umfasst. Die Klemmsegmente 21 weisen an ihrem Innenumfang 22 eine Klemmverzahnung 23 auf, die in die äußere Oberfläche 9 des Rohrs 1 fasst. Jedes Klemmsegment 21 ist im Querschnitt L-förmig konfiguriert, wobei es an seinem der Keilwand 7 zugewandten Ende eine sich radial über seinen zur äußeren Oberfläche 9 des Rohrs 1 parallelen Außenumfang 24 erstreckende Widerlagerschulter 25 aufweist. Diese greift in eine Fixiernut 26 des Tragkörpers 20. Eine quer von der Widerlagerschulter 25 in Richtung der Keilwand 7 abstehende dreieckige Haltenase 27 drückt in das Material des das Klemmsegment 21 U-förmig umgebenden Tragkörpers 20.

Jedes L-förmig konfigurierte Klemmsegment 21 ist bis auf die innere Klemmverzahnung 23 in den Tragkörper 20 eingebettet. Lediglich die Klemmverzahnung 23 ragt aus der Ummantelung des Tragkörpers 20 innenseitig hervor. Die umfangsseitige Außenfläche 28 des Tragkörpers 20 hat die gleiche Schrägung wie der Boden 37 der Verriegelungskammer 5.

Die axiale Breite des Klemmrings 19 beträgt etwa 3/4 der Breite der Verriegelungskammer 5, wodurch der Klemmring 19 innerhalb der Verriegelungskammer 5 verschieblich ist.

Figur 2 verdeutlicht in einer perspektivischen Darstellung den Aufbau des Klemmrings 19 der Figur 1. In den Klemmring 19 sind sechs L-förmige Klemmsegmente 21 eingesetzt. Die Widerlagerschultern 25 erstrecken sich dabei über die gesamte Umfangslänge eines Klemmsegments 21. Der Tragkörper 20 füllt die Bereiche zwischen den Klemmsegmenten 21 aus und ist in einem dieser Bereiche zwischen zwei Klemmsegmenten 21 in Richtung seiner Längserstreckung geschlitzt. Der so gebildete Schlitz 29 ermöglicht das Eingliedern des Klemmrings 19 durch das im Durchmesser verjüngte Muffenende 4 in die Verriegelungskammer 5.

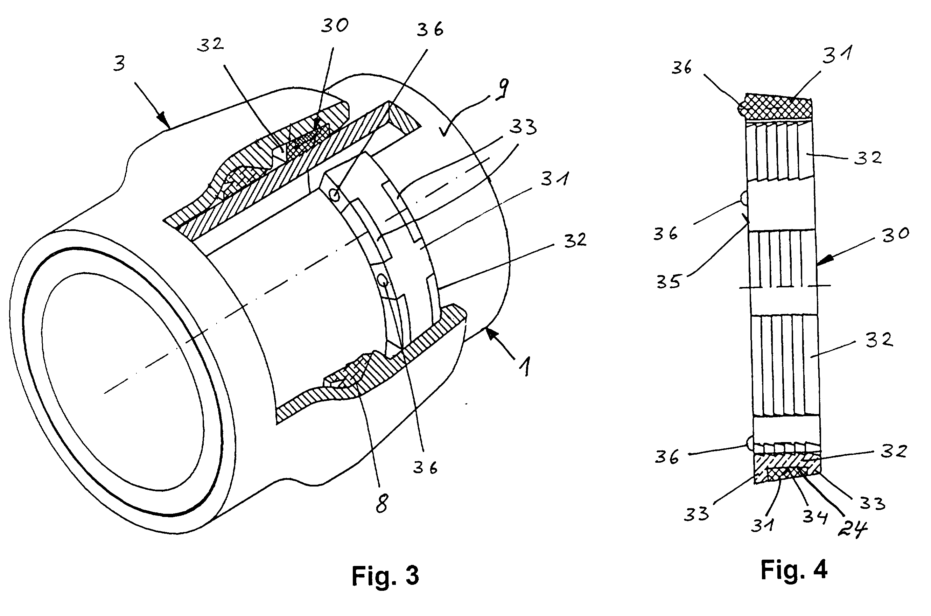

Die in Figur 3 veranschaulichte Ausführungsform einer Muffenverbindung entspricht weitgehend derjenigen der Figur 1. Es wird jedoch ein anders aufgebauter Klemmring 30 verwendet (siehe auch Figur 4).

Dieser Klemmring 30 umfasst einen Tragkörper 31 aus einem gummielastischen Material. Er ist demzufolge flexibel, wodurch ein Schlitz 29 wie bei der Ausführungsform der Figuren 1 und 2 nicht erforderlich ist. Bei dieser Ausführungsform sind Klemmsegmente 32 vorgesehen, die endseitig zwei Widerlagerschultern 33 aufweisen und so eine U-förmig konfigurierte Aufnahmenute 34 ausbilden, die der Tragkörper 31 ausfüllt.

Der Querschnitt dieser Klemmsegmente 32 einschließlich des die Aufnahmenute 33 durchsetzenden Tragkörpers 31 ist dem Querschnitt der Verriegelungskammer 5 angepasst, wobei der Querschnitt der Aufnahmenute 34 trapezförmig hinterschnitten ist.

An seiner dem Muffenende 4 abgewandten Stirnseite weist der Tragkörper 31 zwischen den einzelnen Klemmsegmenten 32 noppenartige Puffer 36 in Form von Halbkugeln auf.

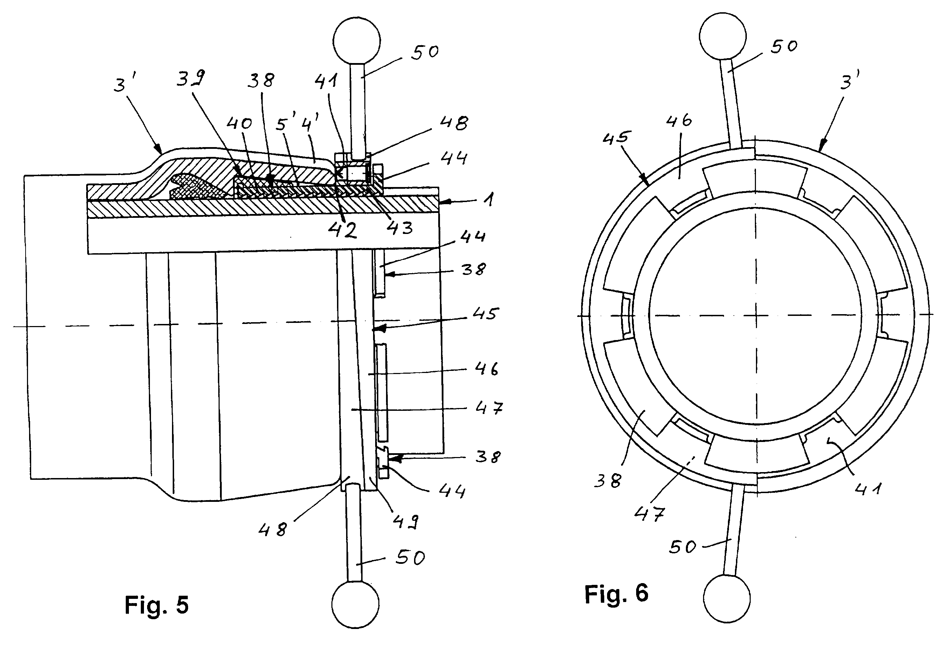

Figur 5 zeigt eine Muffenverbindung, die sich von den vorhergehenden Ausführungsformen dadurch unterscheidet, dass sich die Klemmsegmente 38 in axialer Richtung über das Muffenende 4' hinaus erstrecken. Die Klemmsegmente 38 sind nicht mehr vollständig in den Klemmring 39 eingebettet. Vielmehr bedeckt der Klemmring 39 nur den in der Verriegelungskammer 5' befindlichen Endabschnitt 40 des Klemmsegments 38. Die Verriegelungskammer 5' verjüngt sich konisch bis zur Stirnseite 41 des Muffenendes 4', wobei die Klemmsegmente 38 an der radialen Innenkante 42 der Stirnseite 41 anliegen. Das ausserhalb der Muffe 3' liegende freie Ende 43 der Klemmsegmente 38 weist endseitig eine sich radial erstreckende Spannschulter 44 auf.

Zwischen der Stirnseite 41 des Muffenendes 4' und der Spannschulter 44 ist eine zweiteilige Spannvorrichtung 45 angeordnet. Diese besteht aus zwei Keilsicheln 46, 47, die jeweils einen Winkel von 180° bedecken (vgl. Figur 6). Die axiale Dicke der Keilsicheln 45, 46 nimmt über den Umfang keilförmig ab. Sie sind so positioniert, dass jeweils ein breites Ende 48 und ein schmales Ende 49 aufeinander liegen. An den breiten Enden 48 ist jeweils ein Betätigungshebel 50 bevorzugt lösbar befestigt.

Aus Figur 6 wird in einer anderen Perspektive deutlich, wie die Spannvorrichtung zwischen der Stirnseite 41 des Muffenendes 4' und den Spannschultern 44 angeordnet ist.

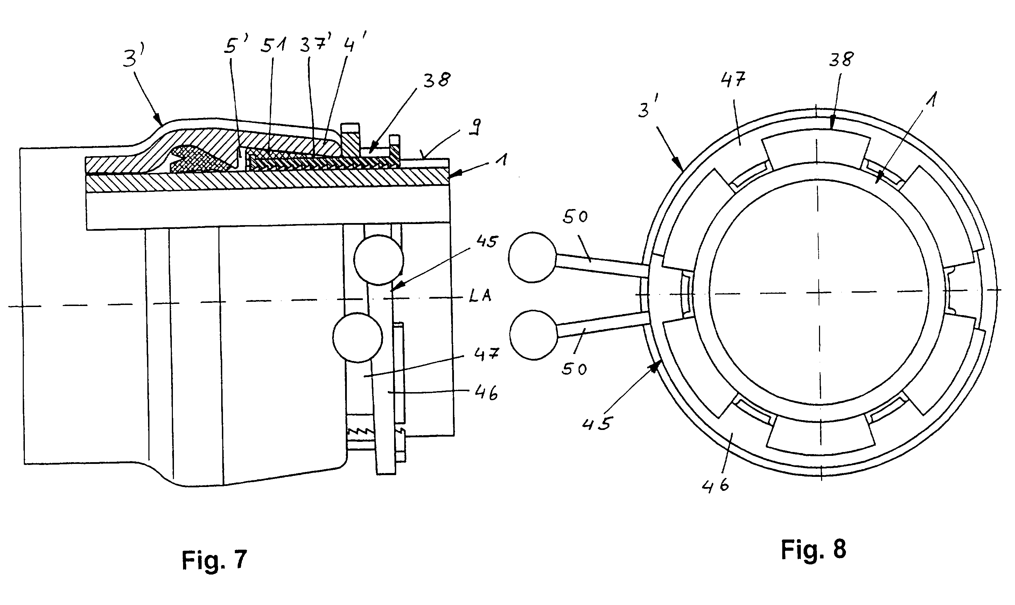

Im Rahmen der Figuren 7 und 8 sind die Klemmsegmente 38 durch eine gegenläufige Schwenkbewegung der Keilsicheln 46, 47 um die Längsachse LA des Rohrs 1 axial zum Muffenende 4 hin verlagert. Dadurch wird der Tragkörper 51 gegen den Boden 37' der Verriegelungskammer 5' gedrückt und so das Klemmsegment 38 gegen die äußere Oberfläche 9 des Rohrs 1 gepresst.

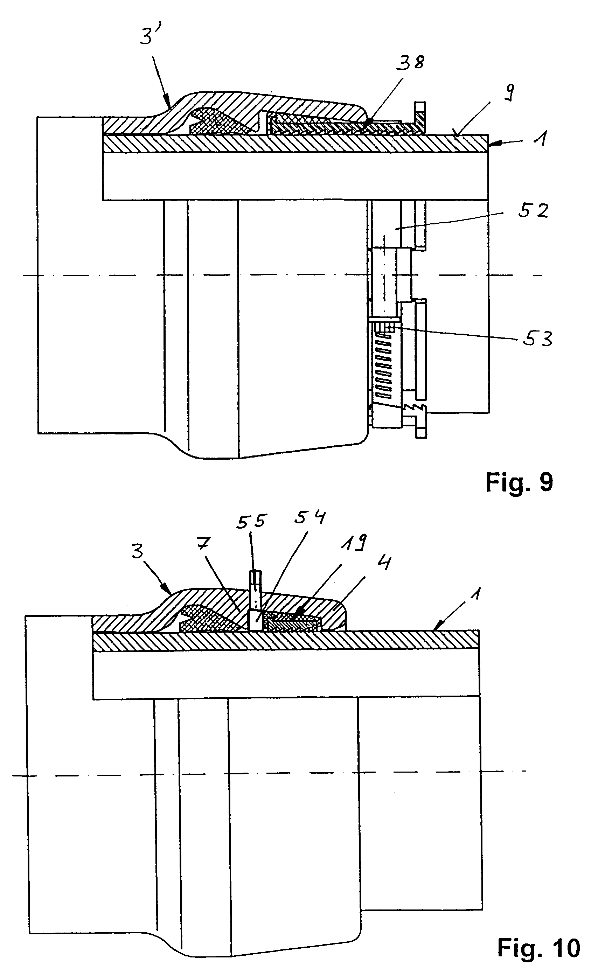

In Figur 9 ist zur Lagefixierung der aus der Muffe 3' herausgezogenen Klemmsegmente 38 eine Bandschelle 52 aus Edelstahl auf die Klemmsegmente 38 gesetzt. Der Durchmesser der Bandschelle 52 kann über eine Spannschraube 53 reduziert werden, so dass die Klemmsegmente 38 an die äußere Oberfläche 9 des Rohrs 1 gepresst werden. Auf diese Art und Weise wird zum einen eine axiale Lagefixierung der Klemmsegmente 38 erzielt und zum anderen eine zusätzliche radiale Klemmkraft aufgebracht.

Die Muffenverbindung nach Figur 10 entspricht weitgehend derjenigen der Figur 1. Jedoch ist zwischen der Keilwand 7 und dem Klemmring 19 ein mit Druckluft gefüllter Schlauch 54 vorgesehen, der über ein Ventil 55 befüllbar ist. Der Schlauch 54 verdrängt den Klemmring 19 in Richtung zum Muffenende 4 und bewirkt auf diese Art und Weise die Verriegelung der Muffenverbindung.

### Bezugszeichenaufstellung

- 1: - Rohr
- 2: - Ende v. 1
- 3: - Muffe 3' - Muffe
- 4: - Muffenende 4' - Muffenende v. 3'
- 5: - Verriegelungskammer 5' - Verriegelungskammer v. 3'
- 6: - Dichtkammmer
- 7: - Kejlwand
- 8: - Dichtelement
- 9: - äußere Oberfläche v. 1
- 10: - Innenseite v. 8
- 11: - Dichtlippe
- 12: - vordere Innenkante v. 8
- 13: - hintere Innenkante v. 8
- 14: - Stirnseite v. 8
- 15: - Einkerbung in 14
- 16: - Stirnfläche
- 17: - hintere Stirnfläche
- 18: - Kragen
- 19: - Klemmring
- 20: - Tragkörper
- 21: - Klemmsegment
- 22: - Innenumfang v. 21
- 23: - Klemmverzahnung
- 24: - Außenumfang v. 21
- 25: - Widerlagerschulter
- 26: - Fixiernut
- 27: - Haltenase
- 28: - Außenfläche v. 20
- 29: - Schlitz
- 30: - Klemmring
- 31: - Tragkörper
- 32: - Klemmsegment
- 33: - Widerlagerschulter
- 34: - Aufnahmenute
- 35: - Stirnseite v. 31
- 36: - Puffer
- 37: - Boden
- 37': - Boden v. 5'
- 38: - Klemmsegment
- 39: - Klemmring
- 40: - Endabschnitt
- 41: - Stirnseite v. 4'
- 42: - Innenkante v. 41
- 43: - freies Ende v. 38
- 44: - Spannschulter v. 38
- 45: - Spannvorrichtung
- 46: - Keilsichel
- 47: - Keilsichel
- 48: - breites Ende v. 46, 47
- 49: - schmales Ende v. 46, 47
- 50: - Betätigungshebel
- 51: - Tragkörper
- 52: - Bandschelle
- 53: - Spannschraube
- 54: - Schlauch
- 55: - Ventil
- LA: - Längsachse v. 1

## Patentansprüche

1. Muffenverbindung mit einer Schubsicherung, bei der ein Ende (2) eines Rohrs (1) in eine Muffe (3, 3') einschiebbar ist, wobei innerhalb der Muffe (3, 3') ein Dichtelement (8) vorgesehen und in einer sich zum Muffenende (4, 4') hin im Durchmesser verjüngenden Verriegelungskammer (5, 5') ein Klemmring (19, 30, 39) angeordnet ist, der aus einem ringförmigen Tragkörper (20, 31, 51) aus einem zumindest begrenzt nachgiebigen Material und mehreren in Umfangsrichtung im Abstand zueinander vom Tragkörper (20, 31, 51) verteilt gehaltenen, am Innenumfang (22) verzahnten Klemmsegmenten (21, 32, 38) aus einem demgegenüber härteren Material besteht, **dadurch gekennzeichnet**, dass die Klemmsegmente (21, 32, 38) durch mindestens eine sich radial über den Augenumfang (24) erstreckende Widerlagerschulter (25, 33) mit dem Tragkörper (20, 31, 51) gekoppelt sind.

2. Muffenverbindung nach Anspruch 1, **dadurch gekennzeichnet**, dass die Widerlagerschulter (25, 33) sich über die gesamte Umfangslänge eines Klemmsegments (21, 32, 38) erstreckt.

3. Muffenverbindung nach Anspruch 1 oder 2, **dadurch gekennzeichnet**, dass die Klemmsegmente (21, 32) in Längsrichtung der Muffe (3) einen im wesentlichen L-, T- oder U-förmigen Querschnitt aufweisen.

4. Muffenverbindung nach einem der Ansprüche 1 bis 3, **dadurch gekennzeichnet**, dass der Tragkörper (31) aus einem gummielastischen Material besteht und im Bereich jedes Klemmsegments (32) eine durch zwei Widerlagerschultern (33) des U-förmigen Klemmsegments (32) gebildete Aufnahmenute (34) umfasst.

5. Muffenverbindung nach Anspruch 4, **dadurch gekennzeichnet**, dass die Aufnahmenute (34) einen trapezförmigen Querschnitt aufweist.

6. Muffenverbindung nach einem der Ansprüche 1 bis 5, **dadurch gekennzeichnet**, dass der sich in Längsrichtung der Muffe (3) erstreckende Querschnitt jedes U-förmigen Klemmsegments (32) dem Querschnitt der Verriegelungskamner (5) angepasst ist.

7. Muffenverbindung nach einem der Ansprüche 1 bis 6, **dadurch gekennzeichnet**, dass der Tragkörper (31) an seiner dem Muffenende (4) abgewandten Stirnseite (35) auf dem Umfang verteilte noppenartige Puffer (36) aus einem nachgiebigen Material aufweist.

8. Muffenverbindung nach einem der Ansprüche 1 bis 3, **dadurch gekennzeichnet**, dass jedes L-förmige Klemmsegment (21) bis auf die innere Klemmverzahnung (23) in den Tragkörper (20) eingebettet ist und die seitlich des Klemmsegments (21) angeordnete Widerlagerschulter (25) in eine Fixiernut (26) des Tragkörpers (20) fasst.

9. Muffenverbindung nach einem der Ansprüche 1 bis 3 oder 8, **dadurch gekennzeichnet**, dass an der Widerlagerschulter (25) eine quer abstehende Haltenase (23) vorgesehen ist.

10. Muffenverbindung nach einem der Ansprüche 1 bis 3, 8 oder 9, **dadurch gekennzeichnet**, dass der Tragkörper (20) im Bereich zwischen zwei Klemmsegmenten (21) geschlitzt ist.

11. Muffenverbindung nach einem der Ansprüche 1 bis 3 oder 8 bis 10, **dadurch gekennzeichnet**, dass ein Klemmsegment (38) in axialer Richtung das Muffenende 4' durchsetzt und an seinem freien Ende (43) eine sich radial erstreckende Spannschulter (44) aufweist.

12. Muffenverbindung nach Anspruch 11, **dadurch gekennzeichnet**, dass die Klemmsegmente (38) mit Hilfe von an der Spannschulter (44) angreifenden Spannvorrichtung (45) axial zum Muffenende hin verschiebbar sind.

13. Muffenverbindung nach einem der Ansprüche 1 bis 10, **dadurch gekennzeichnet**, dass der Klemmring (38) mittels eines in der Verriegelungskammer (5') angeordneten, mit Druckfluid beaufschlagbaren Schlauchs (54) axial verlagerbar ist.

14. Muffenverbindung nach einem der Ansprüche 10 bis 13, **dadurch gekennzeichnet**, dass die Verriegelungselemente (38) lagefixierbar sind.
